# EUROPEAN PATENT SPECIFICATION

(11) **EP 1 562 186 B1**
(45) Date of publication and mention of the grant of the patent: **17.12.2008**
(21) Application number: 03772716.1
(22) Date of filing: 12.11.2003
(51) Int. Cl.: G11B 7/09, G11B 7/135

(54) **DOUBLE-WAVELENGTH LIGHT SOURCE UNIT AND OPTICAL HEAD DEVICE**
DOPPELWELLENLÄNGENLICHTQUELLENEINHEIT UND OPTISCHE KOPFEINRICHTUNG
UNITE DE SOURCE LUMINEUSE A LONGUEUR D'ONDE DOUBLE ET DISPOSITIF DE TETE OPTIQUE

(30) Priority: 13.11.2002 JP 2002329724
(43) Date of publication of application: 10.08.2005
(73) Proprietor: ASAHI GLASS COMPANY LTD., Tokyo 100-8405 (JP)
(72) Inventor: MURAKAMI,R., c/o Asahi Glass Koriyamadenzai Co.Ltd, Koriyama-shi, Fukushima 963-0215 (JP); OOI, Y., c/o Asahi Glass Koriyamadenzai Co. Ltd., Koriyama-shi, Fukushima 963-0215 (JP)
(74) Representative: Müller-Boré & Partner Patentanwälte
(86) International application number: PCT/JP2003/014386
(87) International publication number: WO 2004/044905

(56) References cited:
- WO-A-20/04032126
- JP-A- 2000 123 403
- JP-A- 2002 288 854
- JP-A- 2002 342 956
- JP-A- 2003 338 076
- US-A- 6 072 579
- US-A1- 2002 018 432
- PATENT ABSTRACTS OF JAPAN vol. 2000, no. 25, 12 April 2001 (2001-04-12) & JP 2001 216677 A (HITACHI LTD), 10 August 2001 (2001-08-10)
- PATENT ABSTRACTS OF JAPAN vol. 2000, no. 06, 22 September 2000 (2000-09-22) & JP 2000 076689 A (SHARP CORP), 14 March 2000 (2000-03-14)

## Description

### TECHNICAL FIELD

The present invention relates to a double-wavelength light source unit and an optical head device, in particular to a double-wavelength light source unit to be used for an optical head device for recording or reproducing an information from at least two types of optical recording media such as optical disks, and to an optical head device employing it.

### BACKGROUND ART

Heretofore, CD type optical disks such as CD-Rs or CD-RWs have been used as optical recording media. In recent years, DVD type optical disks having a large capacity such as DVD-RAMs or DVD-Rs are more popularly used as optical recording media.

Under the circumstances, a CD/DVD compatible optical head device has been practically used for recording or reproducing an information of CD and DVD optical disks as optical recording media having different specification, with a single optical head device. In particular, in a case of recording and reproducing an information in e.g. a CD-R employing a medium having high light-absorptivity in a 650 nm wavelength band for an optical recording medium layer, the optical head device needs to be provided with a laser diode of 790 nm wavelength band for CD in addition to a laser diode of 650 nm wavelength band for DVD.

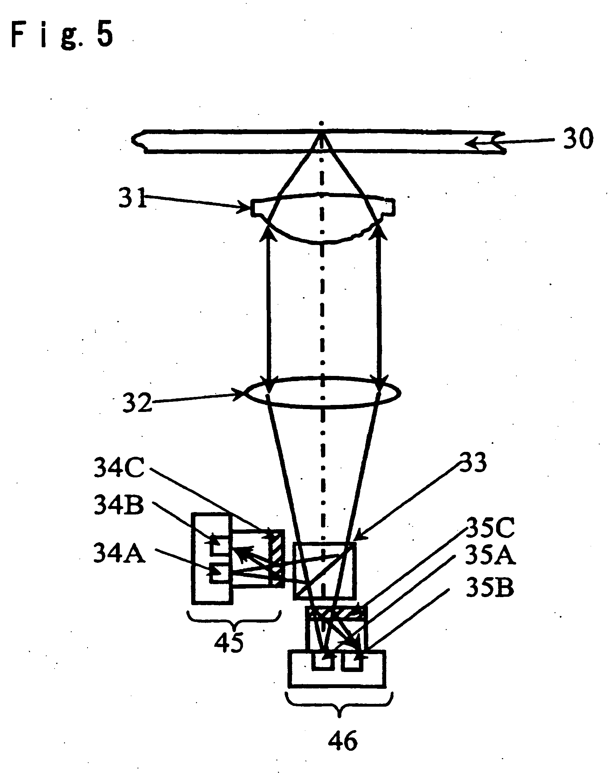

Fig. 5 shows an example of the construction of a conventional CD/DVD compatible optical head device in which a light source unit 46 for CD in which a laser diode 35A of 790 nm wavelength band, photodetector 35B and a diffraction grating 35C are integrally formed, and a light source unit 45 for DVD in which a laser diode 34A of 650 nm wavelength band, a photodetector 34B and a diffraction element 34C are integrally formed, are separately disposed.

Light beams emitted from the laser diodes 34A and 35A are transmitted through the diffraction gratings 34C and 35C and combined into the same optical axis by a wavelength-combining prism 33, converted into parallel beams by a collimator lens 32 and converged on an information-recording plane of an optical disk 30 by an objective lens 31. The emitted light beams reflected by the information-recording plane become signal lights and converted again to parallel beams by the objective lens 31, converged by a collimator lens 32, and parts of the reflected signal lights are converged on planes of detectors 34B and 35B respectively by the diffraction elements 34C and 35C to be electrical signals.

In Fig. 5, diffraction gratings for generating tracking beams are formed on a light-source side of the diffraction elements 34C and 35C, and holographic beam splitters for converging the signal lights on photo-receiving planes of the detectors 34B and 35B are formed on the optical-disk side of the diffraction gratings 34C and 35C.

Further, such a construction is proposed, which employs a monolithic double-wavelength laser diode in which a laser diode of 790 nm wavelength band and a laser diode of 650 nm wavelength band are formed in one chip, or a double-wavelength laser diode in which laser chips for the two wavelength bands are disposed so that the distance between their emission points is about from 100 to 300 µm, whereby the number of parts can be reduced and down-sizing and low cost can be achieved as compared with conventional optical head devices in which each of the laser chips are disposed in the respective units.

This construction uses an element in which a monolithic double-wavelength laser diode in which a laser diode of 790 nm wavelength band and a laser diode of 650 nm wavelength band are formed in one chip, or a double-wavelength laser diode in which laser chips of these wavelength bands are disposed so that the distance between their emission points is about from 100 to 300 µm, and a photo-receiving element are integrally formed. In this case, the diffraction grating to be used for conventional 3-beam method or differential push-pull method and a holographic beam splitter for converging light to the photodetector, generate diffraction light of each of incident light beams of 790 nm wavelength band for CD and of 650 nm wavelength band for DVD, and the excess diffraction light becomes stray light and interfuses into the photodetector. Therefore, these arise a problem that recording and reproducing of signal can not be stably carried out.

Further, when only a diffraction grating is provided to be used for 3-beam method for CD, a light beam for DVD is diffracted by the diffraction grating for CD. Accordingly, the light intensity of light beam reaching to the optical disk is reduced, which prevents reproducing or recording of DVD type optical disk.

Further, when the diffraction grating to be used for the 3-beam method and a phase plate provided for reducing return light to minimize the variation of laser power, are respectively disposed, wavefront aberrations of the respective parts are summed up, and accordingly, there occurs a problem that the total wavefront aberration is increased.

JP 2001-216677 disclosed a optical pickup and information reproducing device employing a two-wavelength multi-semiconductor laser and a diffraction grating, whose diffraction efficiency is provided with the prescribed wavelength selectivity. One diffraction grating is arranged in optical paths between the light source a half mirror and one in the optical path between the half mirror and the photodetector.

JP 2002-288854 discloses an optical pickup device utilizing detecting track signals made with a 3-beam method or a DPP method by means of a light source provided in one package. The light source unit is provided with one semiconductor laser chip emitting two different wavelengths and one multi-division photoreceptor. Two transmission diffraction gratings, which are different from each other in pitches and directions of their straight lines, are alternately provided at an equal interval on a diffraction grating substrate.

JP 2000-076689 discloses an optical pickup device comprising two proximately arranged semiconductor lasers oscillating each respectively in a 650 nm band and in a 780 nm band. A 3-beam purpose diffraction grating for generating three beams for tracking control, a two-splitting second hologram element diffracting only the second semiconductor laser light, and a four-splitting first hologram element diffracting only the laser light of the first semiconductor laser are arranged in the optical axes of the first semiconductor laser and the second semiconductor laser.

WO 2004/032126 discloses an optical scanning device for recording and reading both a high-density, HD, record carrier and a low-density, LD, record carrier comprising a two-wavelength diode laser. In the path of both the HD beam and the LD beam two diffraction structures are arranged, one of which forms a three-spot grating for only one of the beams and the other forms a three-spot grating for only the other beam. The diffraction structures are preferably integrated in one element.

US 6072579 discloses an optical pickup apparatus including a first and a second light source which selectively emit a first and a second light beam of different wavelengths. A holographic optical element receives a reflection beam of the light spot from one of the first and second optical disks and provides holographic effects on the reflection beam so as to diffract the reflection beam in predetermined diffracting directions depending on the wavelength of the reflection beam.

EP 1001413 discloses an optical pickup device including a first and a second laser beam sources having respectively wavelength of 780 nm and of 650 nm, being disposed in the vicinity of each other. Emission lights from the first laser beam source and the second laser beam source are emitted along substantially the same optical axis and the light reflected from the information recording medium is returned along the optical axis. The optical pickup device comprises a first diffraction grating, a second diffraction grating the first diffraction grating being substantially transparent for a wave length of 780 nm and diffracting a wave length of 650 nm, and the second diffraction grating being substantially transparent for a wave length of 650 nm while diffracting a wave length of 780 nm.

Under the above circumstances, it is an object of the present invention to provide a double-wavelength light source unit which enables to stably detect a signal at the time of recording or reproducing an information from a CD type optical disk and a DVD type optical disk, in an optical head device employing a double-wavelength laser as a light source, and to provide an optical head device employing it.

### DISCLOSURE OF THE INVENTION

The above object is fulfilled by double-wavelength light source unit having the features disclosed in claim 1 and an optical head device having the features as disclosed in claim 7. Preferred embodiments are defined in the dependent subclaims.

According in an aspect of the present invention these is provided a double-wavelength light source unit comprising a double-wavelength light source emitting two light beams of different wavelengths from different emission points, a photo detector and a double-wavelength diffraction element for transmitting the two light beams with different wavelengths.

Further, the two light beams of different wavelengths are a light beam of wavelength λ₁, and a light beam of λ₂. The double-wavelength diffraction element comprises:
a first diffraction grating which transmits a light beam of wavelength λ₁ without diffracting and diffracts at least a light beam having a polarization plane in a light beam of wavelength λ₂ and converts it to a tracking beam,
second diffraction grating which diffracts at least a light beam having a polarization plane in the light beam of wavelength λ₁ and converts it to a tracking beam and transmits the light beam of wavelength λ₂ without diffracting,
a third diffraction grating which transmits the light beam of wavelength λ₁ without diffracting and diffracts a detectable amount of at least the light beam having a polarization plane in the light beam of wavelength λ₂, and
a fourth diffraction grating which transmits a linearly polarized light beam of wavelength λ₁ having a first polarization plane, diffracts a detectable amount of a linearly polarized light beam of wavelength λ₁ having a second polarization plane perpendicular to the first polarization plane, and transmits a linearly polarized light beam of wavelength λ₂ having the first polarization plane.

Further, according to another aspect of the present invention these is provided a double-wavelength light source unit according to the above-mentioned, which comprises:
the first diffraction grating which transmits a light beam of wavelength λ₁ without diffracting and diffracts a light beam of wavelength λ₂ and converts it to a tracking beam,
the second diffraction grating which diffracts the light beam of wavelength λ₁ and converts it to a tracking beam and transmits the light beam of wavelength λ₂ without diffracting,
the third diffraction grating which comprises a grating material forming a concavo-convex shaped grating and a filler filling the concavo-convex portion of the grating material, wherein the refractive indices of the grating material and the filler for the light beam of wavelength λ₁ are equal so as to transmit the light beam without diffracting and the refractive indices of the grating material and the filler are different for an incident light beam of wavelength of λ₂ so as to diffract the light beam of a detectable amount, and
the fourth diffraction grating which transmits a linearly polarized light beam of wavelength λ₁ having a first polarization plane, diffracts a linearly polarized light beam of wavelength λ₁ having a second polarization plane perpendicular to the first polarization plane of a detectable amount, and transmits a linearly polarized light beam of wavelength λ₂ having the first polarization plane.

Further preferables, the present invention provides the double-wavelength light source unit according to the above-mentioned, wherein a light-output side of the double-wavelength diffraction element is provided with a phase plate which generates a phase difference of an odd number times of λ₁/4 for a light beam of wavelength λ₁.

Further preferably, the present invention provides the double-wavelength light source unit according to the above-mentioned, wherein the first diffraction grating and the second diffraction grating constitute a double-wavelength-selection diffraction grating, and wherein:
the first diffraction grating is a polarizing diffraction grating which transmits a linearly polarized light beam of wavelength λ₁ having a first polarization plane without diffracting and diffracts a linearly polarized light beam of wavelength λ₂ having a second polarization plane perpendicular to the first polarization plane and converts it to a tracking beam,
the second diffraction grating is a polarizing diffraction grating which diffracts a linearly polarized light beam of wavelength λ₁ having the first polarization plane and converts it to a tracking beam and transmits a linearly polarized light beam of wavelength λ₂ having the second polarization plane without diffracting.

Further, according to the present invention provides the double-wavelength light source unit according to the above-mentioned, wherein the first diffraction grating and the second diffraction grating constitute a double-wavelength-selection diffraction grating, and wherein:
the first diffraction grating comprises a grating material forming a concavo-convex shaped grating and a filler filling the concavo-convex portion of the grating material, wherein the refractive indices of the grating material and the filler are equal for an incident light beam of wavelength λ₁ so as to transmit the light beam without diffracting and the refractive indices of the grating material and the filler are different for an incident light beam of wavelength of λ₂ so as to diffract the light beam and convert it to a tracking beam,
the second diffraction grating comprises a grating material forming a concavo-convex shaped grating and a filler filling the concavo-convex portion of the grating material, wherein the refractive indices of the grating material and the filler are equal for an incident light beam of a wavelength λ₂ so as to transmit the light beam without diffracting and the refractive indices of the grating material and the filler are different for an incident light beam of wavelength of λ₁ so as to diffract the light beam and convert it to a tracking beam.

Further, the present invention provides an optical head device which comprises the double-wavelength light source unit to be used in combination with at least an objective lens.

### BRIEF DESCRIPTION OF THE DRAWINGS

Fig. 1 is a cross-sectional view showing an example of the construction of the double-wavelength light source unit of the present invention, wherein (a) shows a case where a light beam of wavelength λ₁ is incident, and (b) shows a case where a light beam of wavelength λ₂ is incident.
Fig. 2 is a cross-sectional view showing an example of the double-wavelength selection diffraction grating of the present invention, wherein (a) shows a case where a light beam of wavelength λ₁ is incident, and (b) shows a case where a light beam of wavelength λ₂ is incident.
Fig. 3 is a cross-sectional view showing another example of the double-wavelength selection diffraction grating of the present invention, wherein (a) shows a case where a light beam of wavelength λ₁ is incident, and (b) shows a case where a light beam of wavelength λ₂ is incident.
Fig. 4 is a side view schematically showing an optical head device employing the double-wavelength light source unit of the present invention.
Fig. 5 is a side view schematically showing a conventional optical head device.

### BEST MODE FOR CARRYING OUT THE INVENTION

The first Embodiment of the present invention concerns a double-wavelength light source unit. Some examples of the first Embodiment are described as follows.

The double-wavelength light source unit of the present invention comprises a double-wavelength light source emitting two light beams of different wavelengths from different emission points, a photodetector and a double-wavelength diffraction element transmitting two light beams of different wavelengths.

The double-wavelength light source means a light source emitting two light beams of different wavelengths, in which a double-wavelength laser diode is mainly used and the double-wavelength laser diode includes a monolithic type and a type in which two laser chips for different wavelength bands are bonded, and any one of these can be employed. Further, as the photodetector, a photo-receiving element such as a photodiode or a phototransistor can be employed.

The double-wavelength diffraction grating includes two types i.e. a diffraction grating generating a tracking beam and a diffraction grating generating a detection signal. Namely, the double-wavelength diffraction element comprises a first diffraction grating which transmits a light beam of either one of the two wavelengths emitted from the double-wavelength light source, without diffracting and diffracts at least a light beam having a polarization plane in a light beam of the other one of the wavelengths and converts it to a tracking beam, a second diffraction grating which diffracts at least a light beam having a polarization plane in a light beam of the one of the wavelengths and converts it to a tracking beam, and transmits a light beam of the other one of the wavelengths without diffracting, and a diffraction grating which diffracts only a detectable amount of at least a light beam of either one of the two wavelengths. The number of diffraction gratings for diffracting only a detectable amount may be one or two.

Namely, in an example not covered by the claims in the light source unit, the double-wavelength diffraction element may comprise three diffraction gratings in total, including a single diffraction grating generating a detection signal in addition to the first diffraction grating and the second diffraction grating generating track beams from the two light beams having different wavelengths, or According to an embodiment of the invention the double-wavelength diffraction element comprises in an Example not covere the claims four diffraction gratings in total including further two diffraction gratings for generating detection signals for the respective wavelengths, in addition to the first diffraction grating and the second diffraction grating.

In a case where the total three diffraction gratings are provided in the light source unit, the additional diffraction grating may, for example, be a concavo-convex type diffraction grating, a polarizing diffraction grating using a birefringent material or a wavelength-selection diffraction grating formed by combining materials having different refractive index-wavelength dispersions. In this case, the polarizing diffraction grating or the wavelength-selection diffraction grating may be outside of the light source unit and used in combination with the objective lens in the same manner. By making a construction in which the diffraction grating diffracting only a detectable amount of a light beam of one of the wavelengths is separated, it becomes possible to individually adjust each of the diffraction gratings to obtain a sufficient detection signal even in a case where error of emission points occurs in manufacturing the type of double-wavelength light source in which two laser chips having different wavelengths are bonded.

The double-wavelength diffraction element is
constituted by four diffraction gratings. Namely, they are the first diffraction grating which transmits a light beam of one of the two wavelengths emitted from the double-wavelength light source, without diffracting and diffracts at least a light beam having a polarization plane in a light beam of other one of the wavelengths and converts it to a tracking beam,
the second diffraction grating which diffracts at least a light beam having a polarization plane in a light beam of the one of the wavelengths and converts it to a tracking beam and transmits a light beam of the other one of the wavelengths without diffracting,
a third diffraction grating which transmits a light beam of the one of the wavelengths without diffracting and diffracts a detectable amount of at least a light beam having a polarization plane in a light beam of the other one of the wavelengths, and
a fourth diffraction grating which transmits a light beam of any one of the two wavelengths having a first polarization plane without diffracting, diffracts a detectable amount of a light beam of the wavelength having a second polarization plane perpendicular to the first polarization plane, and transmits a light beam of the other one of the wavelengths having the first polarization plane without diffracting.

Further, when the light beam of the other one of the wavelengths has the second polarization plane, the fourth diffraction grating may transmit the light beam without diffracting or diffract a detectable amount of it.

Here, a light beam having a polarization plane means a light beam in which the polarization plane is not oriented in a specific direction, such as a randomly polarized light beam. Further, a light beam having a first polarization plane or the second polarization plane means a light beam in which the polarization plane is oriented in a specific direction. To convert it to a tracking beam means to generate a beam for tracking the surface of an optical recording medium, which includes a 3-beam conversion by splitting a light beam into three beams, or 5-beam conversion by splitting a light beam into five beams.

Further, it is preferred to dispose the first diffraction grating, the second diffraction grating, the third diffraction grating and the fourth diffraction grating in this order so that the fourth diffraction grating is at the side of an optical recording medium to reduce the diffraction pitches of the third and the fourth diffraction gratings. However, the first and the second diffraction gratings can be exchanged and the third and the fourth diffraction gratings may be exchanged. Further, the first and the third diffraction gratings may also be exchanged.

Further, the two light beams of different wavelengths are defined as a light beam of wavelength λ₁ and a light beam of wavelength λ₂ respectively. The double-wavelength light source unit of the present invention comprises the first diffraction grating which transmits a light beam of wavelength λ₁ without diffracting and diffracts a light beam of wavelength λ₂ and converts it to a tracking beam,
the second diffraction grating which diffracts a light beam of wavelength λ₁ and converts it to a tracking beam and transmits a light beam of wavelength λ₂ without diffracting,
the third diffraction grating which comprises a grating material forming a concavo-convex shaped grating and a filler filling the concavo-convex portion of the grating material, wherein the refractive indices of the grating material and the filler are equal for a light beam of wavelength λ₁ so as to transmit the light beam without diffracting and the refractive indices of the grating material and the filler are different for an incident light beam of wavelength of λ₂ so as to diffract a detectable amount of the light beam, and
the fourth diffraction grating which transmits a linearly polarized light beam of wavelength λ₁ having a first polarization plane, diffracts a detectable amount of a linearly polarized light beam of wavelength λ₁ having a second polarization plane perpendicular to the first polarization plane, and transmits a linearly polarized light beam of wavelength λ₂ having the first polarization plane without diffracting.

The fourth diffraction grating can diffract a linearly polarized light beam of wavelength λ₁ reflected by the optical recording medium and converted to have the second polarization plane by the phase plate, toward the photodetector, when a phase plate for producing an odd number times of λ₁/4 is disposed between the optical recording medium and the unit.

By thus constituting the double-wavelength light source unit, a light beam of wavelength λ₁ can reach an optical recording medium without being diffracted for excess diffraction, which provides an effect that the utilization efficiency of light at a time of recording can be increased. Further, since the light beams of wavelengths λ₁ and λ₂ reach an optical recording medium without needless diffraction and light beams reflected by the optical recording medium are diffracted only by the third are the fourth diffraction gratings towards optical detectors so that unnecessary diffraction light does not incident into the photodetectors, there is an effect that a reproduction or recording of an information can be stably performed when this unit is employed in an optical head device.

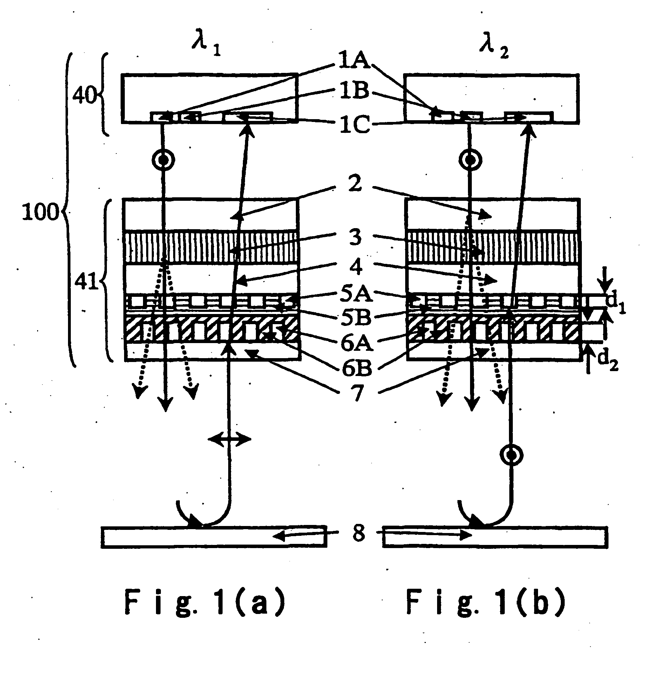

Now, the present invention will be described with examples shown in the drawings. Fig. 1 is a cross-sectional view showing an example of the construction of the double-wavelength light source unit of the present invention, wherein (a) shows a case where a light beam of wavelength λ₁ is incident and (b) shows a case where a light beam of wavelength λ₂ is incident. The double-wavelength light source unit 100 comprises a double-wavelength selection diffraction grating 3, the third diffraction grating and the fourth diffraction grating integrated in a package not shown.

Here, a photo-receiving photo-emission element 40 comprises a laser diode 1A of λ₁=650 nm wavelength band, a laser diode 1B of λ₂=790 nm wavelength band and a photodetector 1C for receiving a signal light reflected by an optical disk 8. Further, the double-wavelength selection diffraction grating 3 is constituted by the first and the second diffraction gratings generating at least 0th diffraction light and ±1st diffraction light beams in which, for example, linear gratings are formed on transparent substrates 2 and 4.

The third diffraction grating is, for example, formed on a transparent substrate 4 and constructed so that the grating material forming a concavo-convex shape grating 5A and a filler 5B for filling the concavo-convex type grating 5A have an equal diffractive index for a light beam of wavelength λ₁ among signal lights reflected by an optical disk 8, so that the light beam is transmitted without being diffracted, and is constructed so that they have different refractive indices for a light beam of wavelength λ₂ so that the light beam of wavelength λ₂ reflected by the optical disk 8 is diffracted toward a photo-receiving plane of the photodetector, whereby the third diffraction grating functions as a beam splitter.

The fourth diffraction grating comprises, for example, a transparent substrate 7, a grating 6A made of a grating material of a birefringent medium formed on the transparent substrate 7 and a filler 6B for filling the grating 6A, which functions as a polarizing beam splitter which transmits a linearly polarized light beam of wavelength λ₁ having a first polarization plane and emitted from a laser diode 1A and a linearly polarized light beam of wavelength λ₂ having the first polarization plane emitted from a laser diode 1B without diffracting, and which diffracts a returned light beam converted to a linearly polarized light beam having a second polarization plane perpendicular to the first polarization plane, towards the photo-receiving plane of the photodetector.

By thus constructing the double-wavelength light source unit, miniaturization can be realized as compared with the case of using light source units for the respective wavelengths and position adjustment of the components in this unit can be omitted.

Fig. 1 shows a construction in which the double-wavelength selection diffraction grating, the third diffraction grating and the fourth diffraction grating are integrally formed. However, they may be individually formed as three diffraction gratings and then fixed in a package.

The third diffraction grating and the fourth diffraction grating will be described in more detail.

In the third diffraction grating, it is preferred that any one of the grating material of the concavo-convex type grating 5A formed on the surface of the transparent substrate 4, and the filler 5B filling at least concave portions of the grating 5A, contains a light-absorbing organic pigment. For example, an organic pigment contained in the grating material, can generate a large difference between the refractive index at wavelength λ₁ and the refractive index at wavelength λ₂ of the grating material by an abnormal dispersion effect. Namely, by appropriately selecting the materials of the grating 5A and the filler 5B, the refractive indices of the grating 5A and the filler 5B at wavelength λ₁ can be equalized, and at the same time, the difference in these refractive indices at wavelength λ₂ can be made large.

By using this method and by appropriately selecting the materials of the grating 5A and the filler 5B, for an incident light beam of wavelength λ₁, the incident light beam is transmitted without generating diffraction light since the refractive indices of both of these materials are equal. On the other hand, when an incident light beam of wavelength λ₂ is transmitted, 0th diffraction light and ±1st diffraction light beams are generated since the refractive indices of both of these materials are different.

Here, "refractive indices are equal at wavelength λ₁" means that they do not have to be numerically completely equal, and they may differ to the extent that a light beam of wavelength λ₁ is transmitted without diffraction of 0.5% or more of the incident light. Further, "the refractive indices are different at a light beam having a wavelength λ₂" means that the diffraction efficiency of ±1st diffraction light beams is at least 2%.

The fourth diffraction grating is made of a birefringent medium having an ordinary refractive index of no and an extraordinary refractive index of nₑ. For example, a grating 6A having a concavo-convex type in cross-section is formed on the surface of a transparent substrate 7, and a filler 6B having a homogeneous refractive index of nₛ fills at least concave portions of the grating 6A, and the fourth diffraction grating is laminated with the third diffraction grating having a concavo-convex type in cross-section.

Here, if, for example, the ordinary refractive index no of the birefringent medium and the refractive index nₛ of the filler are made substantially equal, the fourth diffraction grating transmits an ordinarily polarized incident light without diffracting and can diffract an extraordinarily polarized incident light.

Further, a double-wavelength selection diffraction grating is constituted by the first diffraction grating and the second diffraction grating, and the first diffraction grating of the double-wavelength selection diffraction grating is a polarizing diffraction grating which transmits a linearly polarized light beam of wavelength λ₁ having a first polarization plane without diffracting, and diffracts a linearly polarized light beam of wavelength λ₂ having a second polarization plane perpendicular to the first polarization plane. Further, the second diffraction grating of the double-wavelength selection diffraction grating is a polarizing diffraction grating which diffracts a linearly polarized light beam of wavelength λ₁ having the first polarization plane and transmits a linearly polarized light beam of wavelength λ₂ having the second polarization plane without diffracting. The double-wavelength light source unit is preferably provided with such a double-wavelength selection diffraction grating. Now, an example of the first embodiment will be described with drawings.

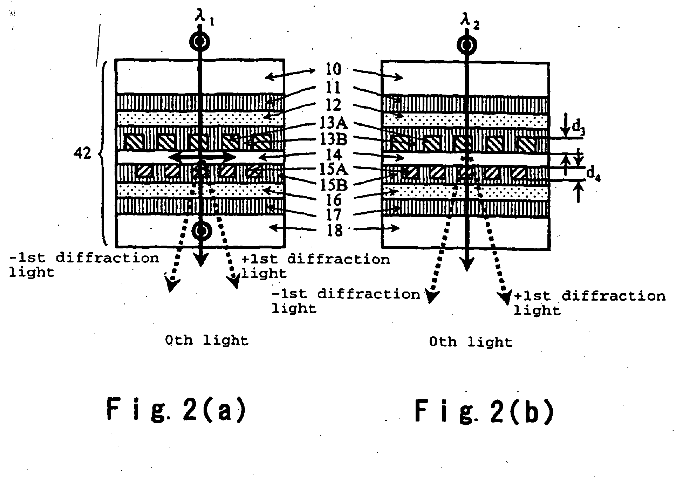

Fig. 2 schematically shows a cross-sectional view of an example of the double-wavelength selection diffraction grating 3 in the double-wavelength light source unit of the present invention, wherein (a) shows a case where a light beam of wavelength λ₁ is incident, and (b) shows a case where a light beam of wavelength λ₂ is incident. On the transparent substrate 10, for example, an organic thin film having a phase-difference-generating function is laminated as a phase plate 12 with an adhesive 11. A first diffraction grating including a concavo-convex type grating 13A made of a birefringent medium having an ordinary refractive index no and an extraordinary refractive index nₑ is formed on the surface of the transparent substrate 14, and a filler 13B having a refractive index nₛ substantially equal to the ordinary refractive index nₒ fills at least concave portions of the grating 13A, and the first diffraction grating is laminated on the phase plate 12.

A second diffraction grating comprising a concavo-convex type grating 15A made of a birefringent medium having an ordinary refractive index no and an extraordinary refractive index nₑ, is formed on a surface of the transparent substrate 14, opposite to the surface on which the first diffraction grating is formed. A filler 15B having a refractive index nₛ substantially equal to the ordinary refractive index no fills at least concave portions of the grating 15A, and the second diffraction grating is laminated on an organic thin film having a phase-difference-generation function as a phase plate 16. Further, the phase plate 16 is laminated on a transparent substrate 18 with an adhesive 17.

Further, the phase plate 12 and the phase plate 16 have a function of generating a phase difference of an integer times for an incident light beam of wavelength λ₂ and generating a phase difference of half integer times for an incident light beam of wavelength λ₁, and they are disposed so that their fast axes are perpendicular to each other. By making their fast axes perpendicular to each other, there is an effect that the light beams of both of these wavelengths are output from the phase plate 16 with the same polarization planes as those incident in the phase plate 12.

Here, the diffraction grating 13A and the diffraction grating 15A are disposed so that extraordinary refractive index axis directions of birefringent media constituting the grating 13A and the grating 15A are, for example, perpendicular to each other and, for example, 45° to the fast axes of the phase plates 12 and 16. By thus disposing the angles between extraordinary refractive index axis directions and the fast axes, the polarization planes of each of the wavelengths and the refractive index axis directions forming the gratings become equal.

For example, the phase plate 12 and the phase plate 16 are made so as to give a phase difference of 5λ/2 to a light beam of wavelength λ₁ and give a phase difference of substantially 2λ to an incident light beam of wavelength λ₂. Here, the reason of making the phase difference of 5λ/2, is that since the thickness of the phase plate for the phase difference is made minimum, the dependency of the phase difference on incident angle and the dependency of the phase difference on wavelength become small. When linearly polarized light beams of wavelength λ₁ and wavelength λ₂ emitted from a double-wavelength light source constituted by laser diodes and having polarization planes parallel to each other, are transmitted through the phase plate 12, the light beam of wavelength λ₁ is output with its polarization plane rotated by 90° while the light beam of wavelength λ₂ is output with its polarization plane unchanged.

By the grating 13A in which the extraordinary refractive index axis direction of the birefringent medium is adjusted so that the polarization of a light beam of wavelength λ₁ becomes an ordinarily polarized light, a light beam of wavelength λ₂ becomes extraordinarily polarized light since its polarization plane is perpendicular to the polarization plane of a light beam of wavelength λ₁, and diffracted to generate 0th diffraction light and ±1st diffraction light beams, while an incident light beam of wavelength λ₁ is transmitted. Since the grating 15A and the grating 13A are made of birefringent medium having extraordinary refractive index axis directions perpendicular to each other, a polarized light beam of wavelength λ₂ becomes an ordinarily polarized light beam and transmitted while a light beam of wavelength λ₁ becomes an extraordinarily polarized light beam and is diffracted to generate 0th diffraction light and ±1st diffraction light beams. Since the fast axis of the phase plate 16 and the fast axis of the phase plate 12 are perpendicular to each other, light beams of wavelength λ₁ and wavelength λ₂ are output as linearly polarized light beams having the same polarization planes as those of incident light beams into the double-wavelength selection diffraction grating 42.

Further, the double-wavelength selection diffraction grating is constituted by laminating the first diffraction grating and the second diffraction grating. The first diffraction grating is composed of a grating material forming a concavo-convex shaped grating and a filler filling the concavo-convex portion of the grating material, the refractive indices of the grating material and the filler are equal for an incident light beam of wavelength λ₁ so as to transmit the light beam without diffracting, and the refractive indices of the grating material and the filler are different for an incident light beam of wavelength λ₂ so as to diffract this light beam. Further, the second diffraction grating is composed of a grating material forming a concavo-convex shaped grating and a filler filling the concavo-convex portion of the grating material, the refractive indices of the grating material and the filler are equal for an incident light beam of wavelength λ₂ so as to transmit the light beam without diffracting, and the refractive indices of the grating material and the filler are different for an incident light beam of wavelength λ₁ so as to diffract this light beam. It is preferred to make a double-wavelength light source unit provided with such a double-wavelength selection diffraction grating. Now, an example of the first embodiment is described with drawings.

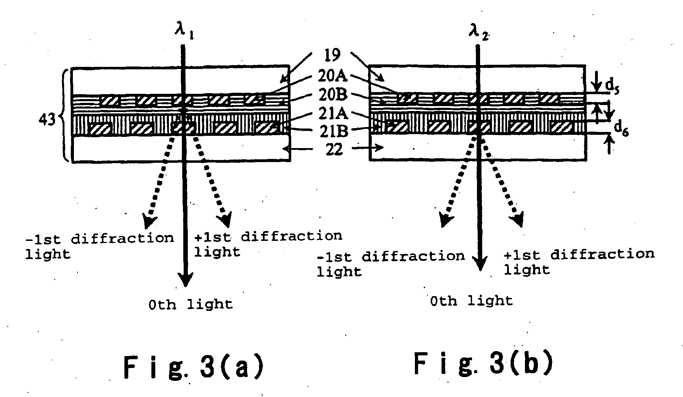

Fig. 3 schematically shows a cross-sectional view of another example of the double-wavelength selection diffraction grating in the double-wavelength light source unit of the present invention, wherein (a) shows a case where a light beam of wavelength λ₁ is incident and (b) shows a case where a light beam of wavelength λ₂ is incident. It is preferred that a transparent substrate 19 on which a first diffraction grating including a concavo-convex shaped grating 20A is formed, and a transparent substrate 22 on which a second diffraction grating including a concavo-convex shaped grating 21A is formed, are provided and at least concave portions of the gratings 20A and 21A are filled with a filler 20B and a filler 21B respectively, and the first diffraction grating and the second diffraction grating are laminated. By thus constructing, there is an effect that the unit can be miniaturized. Further, in the same manner as the third diffraction grating, any one of the material forming the grating 20A or the material of the filler 20B and any one of the material forming the grating 21A or the material of the filler 21B preferably contain a light-absorbing organic pigment.

For example, grating materials of the grating 20A and the grating 21A are assumed to contain an organic pigment. An incident light beam of wavelength λ₁ is transmitted without being diffracted since the refractive indices of the grating material forming the grating 20A and the filler 20B are substantially equal for the wavelength, and an incident light beam of wavelength λ₂ is diffracted to generate 0th diffraction light and ±1st diffraction light beams since the refractive indices of the grating material forming the grating 20A and the filler 20B are different for the wavelength λ₂. Further, the incident light beam of wavelength λ₁ is diffracted to generate 0th diffraction light and ±1st diffraction light beams since the refractive indices of the grating material forming the grating 21A and the filler 21B are different at the wavelength λ₁, and the incident light of wavelength λ₂ is transmitted without being diffracted since the refractive indices of the grating material forming the grating 21A and the filler 21B are made substantially equal at the wavelength λ₂.

Further, it is preferred that a phase plate producing a phase difference of an odd number times of λ₁/4 for an incident light beam of wavelength λ₁ is integrally formed at the light-output side of the double-wavelength diffraction grating in the double-wavelength light source unit.

In Fig. 1, it is preferred to constitute a double-wavelength light source unit in which a phase plate providing a phase difference of an odd number times of λ/4 for an incident light beam of wavelength λ₁ is integrally formed at the light-output side of the double-wavelength diffraction element, for the purpose of omitting adjustment of components and reducing the total wavefront aberration. An odd number times includes 1 time, 3 times, 5 times and 7 times, and is preferably 5 times since such a phase plate provides a phase difference of an integer times of λ₂ for an incident light beam of wavelength λ₂. Here, an integer times includes 1 time, 2 times and 3 times. 1 time is preferred since the dependency of the phase difference on incident angle or on wavelength is small (not shown).

The optical head device as the second embodiment of the present invention will be described.

It is preferred to construct an optical head device which comprises the above-mentioned double-wavelength light source unit and used in combination with at least an objective lens, for the reason that a stable recording or reproduction can be performed since unnecessary diffraction light is not generated, and recording of good efficiency can be performed since the utilization efficiency of light is high.

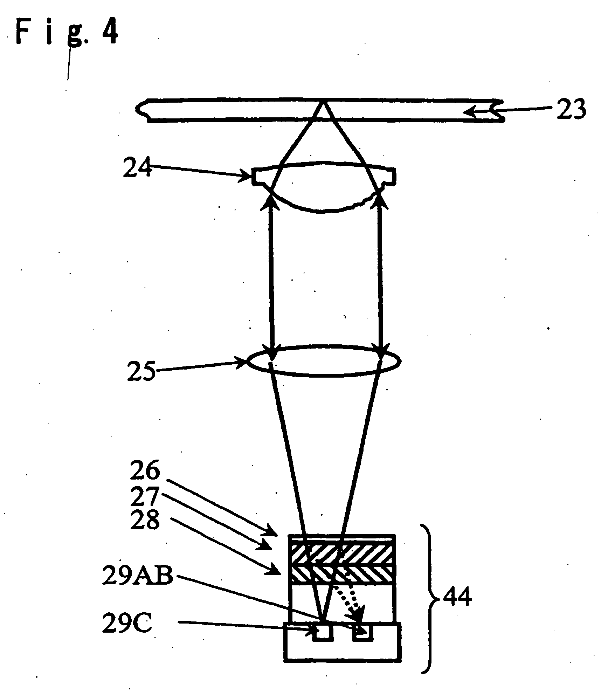

Fig. 4 is a side view showing an example of an optical head device including the double-wavelength light source unit 44 of the present invention. The double-wavelength light source unit 44 is constituted by integrating a double-wavelength laser diode 29AB as a double-wavelength light source, a phase plate 26 providing a phase difference of an odd number times of λ/4 for an incident light beam of wavelength λ₁ among two light beams of wavelength λ₁ and wavelength λ₂ emitted from the double-wavelength laser diode 29AB and providing a phase difference of an integer times of λ₂ for a light beam of wavelength λ₂, a double-wavelength selection diffraction grating 28 constituted by a first and a second diffraction gratings as diffraction gratings for generating 3 beams for detecting a tracking error signal of CD type and of DVD type, a double-wavelength selection diffraction beam splitter 27 constituted by a third diffraction grating and a fourth diffraction grating functioning as holographic beam splitters converging signal light reflected by an optical disk 23 to a photodetector 29C, and the photodetector 29C for detecting the signal light reflected by the optical disk. Here, the double-wavelength laser diode 29AB emits light beams of a λ₁=650 nm wavelength band for DVD and of a λ₂=790 nm wavelength band for CD.

The optical head device is constituted by the double-wavelength laser light source unit 44, a collimator lens 25 and an objective lens 24. A light beam of wavelength λ₁ emitted from the double-wavelength laser diode 29AB is incident into the double-wavelength selection diffraction grating 28 and from 5% to 10% of the incident light is diffracted as ±1st order light beams. The light beam of wavelength λ₁ is further transmitted through the double-wavelength selection diffraction beam splitter 27 and converted to be a circularly polarized light beam by a λ/4 plate as the phase plate 26, converted to be a parallel light beam by a collimator lens 25 and converged on an information recording plane of an optical disk 23 of DVD type by an objective lens 24. The light beam reflected by the information recording plane is again transmitted through the objective lens 24 and the collimator lens 25, converted to a linearly polarized light beam having a polarization plane perpendicular to that at the time of emission by the phase plate 26, diffracted by the double-wavelength selection diffraction beam splitter 27 and converged on a photo-receiving plane of the photodetector 29C.

On the other hand, a light beam of wavelength λ₂ emitted from the double-wavelength laser diode 29AB, is incident into the double-wavelength selection diffraction grating 28 and from 5 to 20% of the incident light beam is diffracted as ±1st order light beams. The light beam of wavelength λ₂ is further transmitted through the double-wavelength selection diffraction beam splitter 27, converted to a linearly polarized light beam by the phase plate 26, converted to a parallel light by the collimator lens 25 and converged on an information recording track of an information recording plane of a CD type optical disk 23 by an objective lens 24 as three beams corresponding to 0th diffraction light and ±1st diffraction light generated by the double-wavelength selection diffraction grating. A light beam reflected by the information recording plane is transmitted again through the objective lens 24 and the collimator lens 25, converted into a linearly polarized light having a polarization plane in parallel with that at the time of emission by the phase plate 26, and diffracted by the double-wavelength selection diffraction beam splitter 27 to be converged on a photo-receiving plane of the photodetector 29C.

Here, the light beam of wavelength λ₂ is diffracted also on the way toward the optical disk by the third diffraction grating of the double-wavelength selection beam splitter 27 to generate diffraction light. However, by determining the grating pitch so as not to enter the diffraction light into the effective area of the collimator lens 25, it is possible to prevent the diffraction light from being converged on the optical disk to be stray light.

Thus, in the case of an optical head device including the double-wavelength light source unit of the present invention, in a DVD system using a light beam of wavelength λ₁, detection of focus signal and detection of pit signal from an information recording plane of an optical disk are performed by an astigmatism method employing the photodetector 29C which is divided into a plurality of photo-receiving portions. A differential push-pull method of detecting ±1st diffraction light beams as a tracking error signals with the photodetector 29C is applied.

On the other hand, in a CD system using a light beam of wavelength λ₂, detection of focus signal and detection of pit signal from an information recording plane of an optical disk is performed by an astigmatism method employing the photodetector 29C which is divided into the same number of photo-receiving portions as those of the DVD system. A 3-Beam method of detecting ±1st diffraction light beams as tracking error signals with the photodetector 29C is applied.

Further, an organic thin film having a phase-difference-generation function, for example, a birefringent medium such as polycarbonate in which the optical axis is uniform, is employed as the phase plate 26. As a result, since the change of phase difference by the difference of incident angle of incident light beam is small as compared with a conventional quartz phase plate, even in a construction that the phase plate is disposed in the vicinity of the double-wavelength light source in which the diffraction light is incident into the double-wavelength diffraction element, a constant and uniform phase difference can be generated.

In the first double-wavelength selection diffraction grating 42 (Fig. 2), since it becomes a polarizing diffraction grating functioning only for one of the wavelengths by making the polarization planes of an incident light beam of λ₁ and an incident light beam of wavelength λ₂ in parallel with each other, there is a flexibility of adjusting the efficiency ratio between 0th diffraction light and ±1st diffraction light depending on the purpose by changing the grating depth of the birefringent medium. In particular, this feature is effective for an optical head device for recording in which the transmittance of 0th diffraction light is preferably set at least 70%. Further, the phase plate 12 can be omitted by making the polarization planes of linearly polarized light beams emitted from the laser diodes 1A and 1B in the photo-receiving emission element 40 (Fig. 1) perpendicular to each other.

In the second double-wavelength selection diffraction grating 43 (Fig. 3), two phase plates and one transparent substrate can be omitted as compared with the first double-wavelength selection diffraction grating, and the intensity of diffracted light does not depend on the polarization direction of the linearly polarized incident light beam. Therefore, the second double-wavelength selection diffraction grating 43 has the flexibility that there is no restriction in the position to dispose the double-wavelength selection diffraction grating and the flexibility that the efficiency ratio of the first double-wavelength selection diffraction grating between 0th diffraction light and ±1st diffraction light can be adjusted depending on purposes.

Fig. 4 shows an example of phase plate 26 having a construction that a birefringent film of polycarbonate is bonded to a glass substrate with an adhesive. However, an organic thin film having a phase-difference-generation function may be directly formed on a glass substrate.

Specifically, a coating liquid for alignment film is coated on a glass substrate to form an alignment film, the film is subjected to a desired alignment treatment and then, a polymeric liquid crystal as a birefringent medium is coated on the film, whereby the optical axis direction of the polymeric liquid crystal is aligned in the alignment direction of the alignment film. Further, a photopolymerization curing agent is contained in the polymeric liquid crystal in advance, and the polymeric liquid crystal is irradiated with light from a light source for photopolymerization to be cured, whereby a phase plate can be obtained without using adhesive agent.

As already partially explained in the above, for the grating made of birefringent medium, a polymeric liquid crystal or an organic film having birefringency by stretching can be employed. As the filler, an adhesive of e.g. acryl type or epoxy type can be employed. The transparent substrate on which a grating is formed may, for example, be a glass substrate or plastic substrate, and from the viewpoint of e.g. durability, a glass substrate is preferably employed.

The organic pigment to be contained in the grating material or the filler, may, for example, be a pigment of piroropyrol type, azo type or phthalocyanine type.

The construction of the double-wavelength light source unit employing the first and the second double-wavelength selection diffraction gratings will be specifically described in the following Examples.

Examples will be described as follows.

### EXAMPLE 1

With respect to the double-wavelength light source unit of the present invention, the first diffraction grating, the second diffraction grating, the third diffraction grating and the fourth diffraction grating will be described in this order.

At first, a case where the first double-wavelength selection diffraction grating is employed will be described employing Fig. 1 and Fig. 2.

As shown in Fig. 2, for the first double-wavelength selection diffraction grating, a phase plate 12 was laminated on a glass substrate employed as a transparent substrate 10 with an acryl type adhesive agent employed as an adhesive 11. A polycarbonate film was employed as a phase plate 12 which is a birefringent organic thin film in which optical axis is uniformly in a stretching direction and which produces a phase difference of 5λ/2 at a wavelength λ₁=650 nm. The fast axis of the phase plate 12 was adjusted to be at 45° to the polarization planes of emission light beams of wavelength λ₁ and wavelength λ₂ emitted from a double-wavelength laser diode employed as the double-wavelength light source and having polarization planes parallel with each other.

When a polycarbonate film producing a phase difference of 5λ/2 at a wavelength λ₁=650 nm, is employed as the phase plate 12, since the phase plate 12 provides a phase difference of substantially twice of λ at a wavelength λ₂=790 nm, a light beam of wavelength λ₁ transmitted through the phase plate 12 is output as a substantially linearly polarized light beam whose polarization plane is perpendicular to that as incident, while the polarization plane of an incident light beam of wavelength λ₂ is unchanged. Further, since the polycarbonate film itself employed as the phase plate 12 is a thin film having a thickness of from 20 µm to 80 µm and the film thickness distribution is not uniform, the variation of transmitted wavefront aberration was large when it was employed alone.

A first diffraction grating including a grating 13A made of a polymeric liquid crystal as a birefringent medium having an ordinary refractive index of nₒ=1.5 and an extraordinary refractive index of nₑ=1.65, was formed on the surface of a glass substrate employed as a transparent substrate 14, and they were laminated on the phase plate 12 with an acryl type adhesive employed as a filler 13B having a refractive index of nₛ substantially equal to the ordinary refractive index nₒ.

Provided that the grating depth of the grating 13A of the first diffraction grating is designated as d₃, since there is no difference between the refractive indices of the grating material and the filler for an ordinarily polarized incident light beam of wavelength λ₁, no phase difference is generated and the light beam is straightly transmitted without being diffracted. On the other hand, for an extraordinarily polarized incident light of wavelength λ₂, a phase difference of 2π×(nₑ-nₛ)×d₃/λ is generated and diffraction light is generated.

Therefore, by adjusting the direction of extraordinary refractive index axis of the grating material so that an incident polarized light beam of wavelength λ₁=650 nm for DVD system corresponded to an ordinary light and an incident polarized light beam of wavelength λ₂=790 nm for CD system corresponded to an extraordinary light for the first diffraction grating including the grating 13A, a polarizing diffraction grating which transmitted an incident polarized light beam of wavelength λ₁ without diffracting and generated diffraction light of an incident polarized light beam of wavelength λ₂, was obtained.

By making the grating depth d₃ of the grating 13A of the first diffraction grating 0.92 µm, a first diffraction grating which transmitted an incident light beam of wavelength λ₁=650 nm and had about 70% of transmittance for 0th diffraction light and about 10% of diffraction efficiency for ±1st diffraction light of an incident light beam of wavelength λ₂=790 nm, was achieved.

On the surface of the transparent substrate 14 opposite to the surface on which the grating 13A was present, a second diffraction grating including a grating 15A made of the same birefringent medium as the grating material of the grating 13A and having an extraordinary refractive index axis direction perpendicular to the extraordinary refractive index axis direction of the grating material of the grating 13A, namely made of a high molecular liquid crystal was formed. Then, they were laminated on an organic thin film having a phase-difference-generation function employed as a phase plate 16 with a filler 15B having a refractive index nₛ substantially equal to the ordinary refractive index no. Further, the phase plate 16 was laminated on a glass substrate employed as a transparent substrate 18 with an adhesive agent 17.

When the grating depth of the grating 15A of the second diffraction grating is d₄, there is no difference between the refractive indices of the grating material and the filler for an ordinarily polarized incident light beam of wavelength λ₂, and accordingly, the light beam is straightly transmitted without being diffracted. On the other hand, there is a phase difference of 2π×(nₑ-nₛ)×d₄/λ for an extraordinarily polarized incident light beam of wavelength λ₁, and the light beam is diffracted to generate diffraction light.

Therefore, for the second diffraction grating, a polarized incident light beam of wavelength λ₁=650 nm for DVD system corresponds to an extraordinary light beam and a polarized light beam of wavelength λ₂=790 nm for CD system corresponds to an ordinary light beam. Accordingly, an incident light beam of wavelength λ₂ is transmitted without being diffracted while an incident light beam of wavelength λ₁ is diffracted to generate diffraction light.

By making the grating depth d₄ of the grating 15A of the second diffraction grating 0.6 µm, a second diffraction grating which has a transmittance of about 80% for 0th diffraction light and a diffraction efficiency of about 7% for ±1st diffraction light for an incident light beam of wavelength λ₁=650 nm, was achieved.

As the phase plate 16, a birefringent organic thin film with the optical axis being uniformly in a stretching direction obtained by stretching a polycarbonate film, was employed in the same manner as the phase plate 12. The fast axis of the phase plate 16 which generates a phase difference of an integer times for an incident light beam of wavelength λ₂ and generates a phase difference of half integer times for an incident light beam of wavelength λ₁, is adjusted to be at an angle of 45° to polarization planes of incident light beams of wavelength λ₁ and wavelength λ₂ having polarization planes perpendicular to each other. In this case, a linearly polarized light beam of λ₁ incident into the phase plate 12 is output as a substantially linearly polarized light beam having a polarization plane perpendicular to the polarization plane as incident, while a linearly polarized incident light beam of wavelength λ₂ is output as a substantially linearly polarized light beam having a polarization plane in parallel with the polarization plane as incident, whereby the linearly polarized light beam of wavelength λ₂ is output with the same polarization plane as that of the incident light beam into the double-wavelength selection diffraction grating 42.

Use of a polycarbonate film, as the phase plate 16, providing a phase difference of 5λ/2 for a light beam of wavelength λ₁=650 nm in the same manner as phase plate 12, provides a phase difference of twice as large as λ₂ for a light beam of wavelength λ₂=790 nm, whereby a light beam of wavelength λ₁ transmitted through the phase plate 16 is output as substantially polarized light beam having a polarization plane perpendicular to the polarization plane as incident, while the polarization plane of the light beam of wavelength λ₂ is unchanged.

As shown in Fig. 1, the third diffraction grating diffracting an incident light beam of wavelength λ₂ includes a grating 5A made of a color resist having a refractive index n₁=1.7 at a wavelength λ₁ and a refractive index n₂=1.66 at a wavelength λ₂ and containing a pigment red 254 as a red organic pigment, and formed on a glass substrate employed as a transparent substrate 4. The concave portions of the third diffraction grating are filled with a filler 5B made of high-refractive index organic material as a homogeneous refractive index material of nₛ=1.7.

Provided that the grating depth of the grating 5A of the third diffraction grating is d₁, since the refractive indices of the grating 5A and the filler 5B are substantially equal (1.7) for an incident light beam of wavelength λ₁, the light beam is straightly transmitted without being diffracted. On the other hand, since the phase difference becomes 2π×(n₂-nₛ)×d₁/λ₂ for an incident light beam of wavelength λ₂, the light beam is diffracted to generate diffraction light.

By making the grating depth of the grating 5A 3.8 µm, a third diffraction grating was achieved which transmitted an incident light beam of wavelength λ₁=650 nm and had a transmittance of about 78% for 0th diffraction light and a diffraction efficiency of about 8% for ±1st diffraction light of an incident light beam of λ₂=790 nm.

On the surface of a glass substrate as a transparent substrate 7, a polymeric liquid crystal as a birefringent medium having a ordinary refractive index axis direction equal to polarization directions of incident light beams of wavelength λ₁=650 nm and wavelength λ₂=790 nm and having an ordinary refractive index nₒ=1.5 and an extraordinary refractive index nₑ=1.65 for a light beam of wavelength λ₁=650 nm, is processed to form a grating 6A as a concavo-convex type polarizing diffraction grating, and the concave portions are filled with an acryl type adhesive agent as a filler 6B having a homogeneous refractive index nₛ substantially equal to the ordinary refractive index nₒ of the birefringent medium.

Provided that the grating depth of the grating 6A is d₂, since the refractive indices of the grating material and the filler 6B are substantially equal for an ordinarily polarized incident light beams of wavelength λ₁=650 nm and wavelength λ₂=790 nm, the light beams are transmitted without being diffracted. On the other hand, for an extraordinarily polarized incident light beam of wavelength λ, a phase difference of 2π×(nₑ-nₛ)×d₂/λ is generated and the light beam is diffracted.

Therefore, since the polarized light beams of wavelength λ₁=650 nm for DVD system and wavelength λ₂=790 nm for CD system emitted from the double-wavelength light source were ordinary light beams for the birefringent medium of the fourth diffraction grating including the grating 6A, no diffraction was occurred to these light beams. Further, by a phase plate of polycarbonate film providing a phase difference of 5λ/4 for wavelength λ₁=650 nm disposed between an optical disk and the light source unit, a polarized light beam of wavelength λ₁=650 nm for DVD system reflected by the optical disk was converted to be an extraordinary light beam for the birefringent medium forming the fourth diffraction grating. Further, by the phase plate of polycarbonate film, a polarized light beam of wavelength λ₂=790 nm for CD system was converted to an ordinary light beam for the birefringent medium forming the fourth diffraction grating. By this construction, a wavelength-selection diffraction beam splitter which does not diffract light beams of wavelength λ₁=650 nm and wavelength λ₂=790 nm on the way to the optical disk and diffracts only the light beam of wavelength λ₁=650 nm on the way back from the optical disk, was obtained.

By making the grating depth d₂ of the grating 6A of the fourth diffraction grating 2.2 µm, a wavelength-selection diffraction beam splitter which has a transmittance of about 0% for 0th diffraction light and a diffraction efficiency of 38% for ±1st diffraction light of an incident light beam of wavelength λ₁=650 nm, was achieved.

In this Example, since the filler is sandwiched and bonded between glass substrates excellent in thickness accuracy and flatness and unlikely to be deformed, transmitted wavefront aberration of light emitted from the double-wavelength light source unit becomes stable and small value.

Specifically, for light beams of wavelength λ₁ and wavelength λ₂, root mean square value of wavefront aberration became at most 0.03 λ.

A double-wavelength light source unit was produced by integrating a photo-receiving emission element 40 comprising a laser diode 1A of wavelength λ₁=650 nm, a laser diode 1B of wavelength λ₂=790 nm and a photo-diode 1C, and a double-wavelength diffraction element 41 formed by laminating from the first diffraction grating to the fourth diffraction grating, with employing a plastic cap not shown.

### EXAMPLE 2

The second double-wavelength selection diffraction grating of the double-wavelength light source unit of the present invention will be described with reference to Fig. 3

On a glass substrate as a transparent substrate 19, in the same manner as the grating 5A of Example 1, a first diffraction grating including a grating 20A made of a color resist having a refractive index of n₁=1.7 at a wavelength λ₁ and a refractive index n₂=1.66 at a wavelength λ₂ containing a pigment red 254 as a red organic pigment, was formed and the concave portions were filled with a filler 20B made of high-refractive index organic material, as a homogeneous refractive index material of nₛ=1.7.

Provided that the grating depth of the grating 20A of the first diffraction grating is d₅, since the refractive indices of the grating 20A and the filler 20B are substantially equal (n=1.7) for an incident light beam of wavelength λ₁, the light beam is transmitted without being diffracted. On the other hand, since the phase difference becomes 2π×(n₂-nₛ)×d₅/λ₂ for an incident light beam of wavelength λ₂, the light beam is diffracted to generate diffraction light.

By making the depth d₅ of the grating 20A 3.2 µm, the transmittance of 0th diffraction light was 80% and the diffraction efficiency of each of ±1st diffraction light beams was 5% for an incident light beam of λ₂=790 nm. Further, a first diffraction grating was achieved in which the transmittance of 0th diffraction light was 95% and the diffraction efficiency of ±1st diffraction light beams and higher order diffraction light beams were each at most 0.5% for an incident light beam of wavelength λ₁=650 nm

Then, on a glass substrate as a transparent substrate 22, a second diffraction grating including a grating 21A made of a color resist having a refractive index n₁=1.74 at a wavelength λ₁ and a refractive index n₂=1.7 at a wavelength λ₂ containing a pigment red 254 as a red organic pigment more than that contained in the above grating 5A or the grating 20A, was formed and the concave portions were filled with a filler 21B made of a high-refractive index organic material as a homogeneous refractive index material of nₛ=1.7.

Provided that the grating depth of the grating 21A of the second diffraction grating is d₆, since the refractive indices of the grating 21A and the filler 21B are substantially equal for an incident light beam of wavelength λ₂, the light beam is transmitted without being diffracted. On the other hand, since the phase difference becomes 2π×(n₁-nₛ)×d₆/λ₁ for an incident light beam of wavelength λ₁, the light beam is diffracted to generate diffraction light.

By making the depth d₆ of the grating 21A 2.6 µm, the transmittance of 0th diffraction light was 78% and the diffraction efficiency of each of ±1st diffraction light beams was 6% for an incident light beam of λ₁=650 nm. Further, a second diffraction grating was achieved in which for an incident light beam of wavelength λ₁=650 nm, the transparency of the 0th diffraction light was 95%, and the diffraction efficiency for +1st diffraction light, -1st diffraction light and each of higher-order diffraction light are all at most 0.5%.

A double-wavelength diffraction element 41 was produced by laminating on the first diffraction grating and the second diffraction grating thus prepared, on the third diffraction grating and the fourth diffraction grating prepared in the same manner as in Example 1. In the same manner as in Example 1, on a photo-receiving emission element 40 in which a laser diode 1A of wavelength λ₁=650 nm, a laser diode 1B of wavelength λ₂=790 nm and a photodiode 1C were formed, a double-wavelength diffraction element 41 was integrally formed with employing a plastic cap not shown to build a double-wavelength light source unit.

### INDUSTRIAL APPLICABILITY

As described above, by employing the double-wavelength light source unit of the present invention, an optical element having a diffraction grating function for generating three beams from a light beam of specific wavelength, and a function of converging a signal light reflected by an optical disk on e.g. a photodetector, without deteriorating a wavefront aberration, is achieved.

Further, in an optical head device employing the double-wavelength light source unit of the present invention, reduction of the number of components of the device and miniaturization can be realized by employing a double-wavelength laser, and at times of recording or reproducing of an information in an optical disk of CD type and an optical disk of DVD type, stable recording and reproducing performance with high light-utilization efficiency can be realized.

## Claims

1. A double-wavelength light source unit comprising a double-wavelength light source (44) emitting two light beams of linearly polarized light of different wavelengths λ₁ and λ₂ from different emission points, a photo detector and a double-wavelength diffraction element for transmitting the two light beams of different wavelengths,
wherein the double-wavelength diffraction element (41;) comprises:
a first diffraction grating (3) capable of generating at least 0th and ±1st order diffraction light beams, which transmits a light beam of wavelength λ₁ without diffracting and diffracts at least a light beam having a specific polarization plane in a light beam of wavelength A₂ and converts it to a tracking beam, the first diffraction grating comprising a grating material forming a concavo-convex shaped grating (13A; 20A) and a filler (13B; 20B) filling the concavo-convex portion of the grating material, wherein the refractive indices of the grating material and the filler are equal for the incident light beam of wavelength λ_{1,} which is transmitted without diffracting and the refractive indices of the grating material and the filler (13B; 20B) are different for the at least one light beam having a specific polarization plane in the incident light beam of wavelength of λ₂, which is diffracted and converted to a tracking beam,
a second diffraction grating (3) capable of generating at least 0th and ±1st order diffraction light beams, which diffracts at least a light beam having a specific polarization plane in a light beam of wavelength λ₁ and converts it to a tracking beam, and transmits a light beam of wavelength λ₂ diffracting, the second diffraction grating comprising a grating material forming a concavo-convex shaped grating (15A; 21A) and a filler (15B; 21B) filling the concavo-convex portion of the grating material, wherein the refractive indices of the grating material and the filler are equal for the incident light beam of wavelength λ₂, which is transmitted without diffracting and the refractive indices of the grating material and the filler are different for the at least one light beam having a specific polarization plane in the incident light beam of wavelength λ₁, which is diffracted and converted to a tracking beam,
a third diffraction grating comprising a grating material forming a concavo-convex shaped grating (5A) and a filler (5B) filling the concavo-convex portion of the grating material, wherein the refractive indices of the grating material (5A) and the filler (5B) for an incident light beam of wavelength λ₁ are equal so as to transmit the light beam without diffracting and the refractive indices of the grating material (5A) and the filler (5B) are different for an incident light beam of wavelength of λ₂ so as to diffract a detectable amount of the light beam of wavelength λ₂, and
a fourth diffraction grating (6A, 69) which transmits an incident linearly polarized light beam of wavelength λ₁ having a first polarization plane, diffracts a detectable amount of a linearly polarized light beam of wavelength λ₁ having a second polarization plane perpendicular to the first polarization plane, and transmits an incident linearly polarized light beam of wavelength λ₂ having the first polarization plane.

2. The double-wavelength light source unit according to Claim 1,
wherein the fourth diffraction grating (6A, 6B), for an extraordinarily polarized incident light beam of wavelength λ₁ is adapted to, generate a phase difference of 2π (nₑ - nₛ) λ₁, wherein nₑ is the extra ordinary refractive index of a polymer liquid crystal constituting a concave-convex portion of the fourth diffraction grating (6A, 6B) nₛ is the homogeneous refractive index nₛ of the filler filling the concave portions, and d₂ is the depth of the grating (6A, 6B).

3. The double-wavelength light source unit according to Claim 1 or 2, wherein a light-output side of the double-wavelength diffraction element is provided with a phase plate (26) which generates a phase difference of an odd number times of λ₁/4 for a light beam of wavelength λ₁.

4. The double-wavelength light source unit according to Claim 1, 2 or 3, wherein the first diffraction grating and the second diffraction grating constitute a double-wavelength-selection diffraction grating, and wherein:
the first diffraction grating is a polarizing diffraction grating which transmits a linearly polarized light beam of wavelength λ₁, having a first polarization plane without diffracting and diffracts a linearly polarized light beam of wavelength λ₂ having a second polarization plane perpendicular to the first polarization plane and converts it to a tracking beam,
the second diffraction grating is a polarizing diffraction grating which diffracts a linearly polarized light beam of wavelength λ₁ having the first polarization plane and converts it to a tracking beam and transmits a linearly polarized light beam of wavelength λ₂ having the second polarization plane without diffracting.

5. The double-wavelength light source unit according to any one of Claims 1 to 3, wherein any one of the grating material or the material of the filler(20B) of the first diffraction grating; and any one of the grating material or the material of the filler (21 B) of the second diffraction grating contains a light-absorbing organic pigment.

6. The double-wavelength light source unit according to anyone of Claims 1 to 4, wherein:
the grating material of the first diffraction grating is a birefringent grating material, wherein the ordinary refracting index nₒ of the birefringent grating material is substantially equal to the refractive index nₛ of the filler (13B) and the extraordinary refractive index axis direction of the birefringent grating material is adjusted so that an incident linearly polarized light beam of wavelength λ₁ having a first polarization plane becomes an ordinary polarized light and is transmitted without diffracting, and an incident linearly polarized light beam of wavelength λ₂ having a second polarization perpendicular to the first polarization plane becomes extraordinary polarized light and diffracted to generate 0th and ±1st diffraction light beams; and
the grating material of the second diffraction grating is a birefringent grating material, wherein the ordinary refractive index nₒ of the birefringent grating material is substantially equal to the refractive index nₛ of the filler(15B), and the extraordinary refractive index axis direction of the birefringent material of the second diffraction grating is adjusted so as to be perpendicular to the extraordinary refractive index axis direction of the birefringent material of the first diffraction grating, so as to transmit an incident light beam of wavelength λ₂ without diffracting and diffract an incident light beam of wavelength λ₁ to generate 0th and ±1 st diffraction light beams.

7. An optical head device which comprises the double-wavelength light source unit as defined in any one of Claims 1 to 6, to be used in combination with at least an

## Patentansprüche

1. Doppelwellenlängenlichtquelleneinheit, die eine Doppelwellenlängenlichtquelle (44), die zwei Lichtstrahlen mit linear polarisiertem Licht verschiedener Wellenlängen λ₁ und λ₂ von verschiedenen Emissionspunkten emittiert, einen Photodetektor und ein Doppelwellenlängenbeugungselement zum Durchlassen der zwei Lichtstrahlen mit verschiedenen Wellenlängen umfasst,
wobei das Doppelwellenlängenbeugungselement (41) umfasst:
ein erstes Beugungsgitter (3), das fähig ist, wenigstens Beugungslichtstrahlen 0-ter und ±1-ter Ordnung zu erzeugen, das einen Lichtstrahl mit der Wellenlänge λ₁ ohne Beugung durchlässt und wenigstens einen Lichtstrahl mit einer spezifischen Polarisationsebene in einem Lichtstrahl der Wellenlänge λ₂ beugt und ihn in einen Verfolgungsstrahl umwandelt, wobei das erste Beugungsgitter ein Gittermaterial, das ein konkavkonvex geformtes Gitter (13A; 20A) bildet, und einen Füllstoff (13B; 20B), der den konkavkonvexen Abschnitt des Gittermaterials füllt, umfasst, wobei die Brechungsindizes des Gittermaterials und des Füllstoffs für den einfallenden Lichtstrahl mit der Wellenlänge λ₁, der ohne Beugung durchgelassen wird, gleich sind und die Brechungsindizes des Gittermaterials und des Füllstoffs (13B; 20B) für den wenigstens einen Lichtstrahl mit einer spezifischen Polarisationsebene in dem einfallenden Lichtstrahl mit der Wellenlänge λ₂, der gebeugt und in einen Verfolgungsstrahl umgewandelt wird, verschieden sind,
ein zweites Beugungsgitter (3), das fähig ist, wenigstens Beugungslichtstrahlen 0-ter und ±1-ter Ordnung zu erzeugen, das wenigstens einen Lichtstrahl mit einer spezifischen Polarisationsebene in einem Lichtstrahl mit der Wellenlänge λ₁ beugt und ihn in einen Verfolgungsstrahl umwandelt und einen Lichtstrahl der Wellenlänge λ₂ ohne Beugung durchlässt, wobei das zweite Beugungsgitter ein Gittermaterial, das ein konkavkonvex geformtes Gitter (15A; 21A) bildet, und einen Füllstoff (15B; 21 B), der den konkavkonvexen Abschnitt des Gittermaterials füllt, umfasst, wobei die Brechungsindizes des Gittermaterials und des Füllstoffs für den einfallenden Lichtstrahl mit der Wellenlänge λ₂, der ohne Beugung durchgelassen wird, gleich sind und die Brechungsindizes des Gittermaterials und des Füllstoffs für den wenigstens einen Lichtstrahl mit einer spezifischen Polarisationsebene in dem einfallenden Lichtstrahl mit der Wellenlänge λ₁, der gebeugt und in einen Verfolgungsstrahl umgewandelt wird, verschieden sind,
ein drittes Beugungsgitter, das ein Gittermaterial umfasst, das ein konkavkonvex geformtes Gitter (5A) und einen Füllstoff (3B), der den konkavkonvexen Abschnitt des Gittermaterials füllt, umfasst, wobei die Brechungsindizes des Gittermaterials (5A) und des Füllstoffs (5B) für einen einfallenden Lichtstrahl mit der Wellenlänge λ₁ gleich sind, um den Lichtstrahl ohne Beugung durchzulassen, und die Brechungsindizes des Gittermaterials (5A) und des Füllstoffs (5B) für einen einfallenden Lichtstrahl mit der Wellenlänge λ₂ verschieden sind, um eine detektierbare Menge des Lichtstrahls mit der Wellenlänge λ₂ zu beugen, und
ein viertes Beugungsgitter (6A, 6B), das einen einfallenden linear polarisierten Lichtstrahl mit der Wellenlänge λ₁, der eine erste Polarisationsebene hat, durchlässt, eine detektierbare Menge eines linear polarisierten Lichtstrahls mit der Wellenlänge λ₁, der eine zweite Polarisationsebene senkrecht zu der ersten Polarisationsebene hat, beugt und einen einfallenden linear polarisierten Lichtstrahl mit der Wellenlänge λ₂, der die erste Polarisationsebene hat, durchlässt.

2. Doppelwellenlängenlichtquelleneinheit nach Anspruch 1, wobei das vierte Beugungsgitter (6A, 6B) für einen außerordentlich polarisierten einfallenden Lichtstrahl mit der Wellenlänge λ₁ geeignet ist, eine Phasendifferenz von 2π (nₑ - nₛ) d₂/λ₁ zu erzeugen, wobei nₑ der außerordentliche Brechungsindex eines Flüssigkristallpolymers ist, der einen konkavkonvexen Abschnitt des vierten Beugungsgitters (6A, 6B) ausmacht, nₛ der homogene Brechungsindex nₛ des Füllstoffs ist, der die konkaven Abschnitten füllt, und d₂ die Tiefe des Gitters (6A, 6B) ist.

3. Doppelwellenlängenlichtquelleneinheit nach Anspruch 1 oder 2, wobei eine Lichtausgangsseite des Doppelwellenlängenbeugungselements mit einer Phasenplatte (26) versehen ist, die für einen Lichtstrahl mit der Wellenlänge λ₁ eine Phasendifferenz mit einem ungeraden Vielfachen von λ₁/4 erzeugt.

4. Doppelwellenlängenlichtquelleneinheit nach Anspruch 1, 2 oder 3, wobei das erste Beugungsgitter und das zweite Beugungsgitter ein Doppelwellenlängen-Auswahlbeugungsgitter bilden, und wobei:
das erste Beugungsgitter ein Polarisationsbeugungsgitter ist, das einen linear polarisierten Lichtstrahl mit der Wellenlänge λ₁, der eine erste Polarisationsebene hat, ohne Beugung durchlässt und einen linear polarisierten Lichtstrahl mit der Wellenlänge λ₂, der eine zweite Polarisationsebene senkrecht zu der ersten Polarisationsebene hat, beugt und ihn in einen Verfolgungsstrahl umwandelt,
das zweite Beugungsgitter ein Polarisationsbeugungsgitter ist, das einen linear polarisierten Lichtstrahl mit der Wellenlänge λ₁, der die erste Polarisationsebene hat, beugt und ihn in einen Verfolgungsstrahl umwandelt und einen linear polarisierten Lichtstrahl mit der Wellenlänge λ₂, der die zweite Polarisationsebene hat, ohne Beugung durchlässt.

5. Doppelwellenlängenlichtquelleneinheit nach einem der Ansprüche 1 bis 3, wobei jeweils das Gittermaterial oder das Material des Füllstoffs (20B) des ersten Beugungsgitters; und jeweils das Gittermaterial oder das Material des Füllstoffs (21 B) des zweiten Beugungsgitters ein lichtabsorbierendes organisches Pigment enthält.

6. Doppelwellenlängenlichtquelleneinheit nach einem der Ansprüche 1 bis 4, wobei:
das Gittermaterial des ersten Beugungsgitters ein doppelbrechendes Gittermaterial ist, wobei der normale Brechungsindex n₀ des doppelbrechenden Gittermaterials im Wesentlichen gleich dem Brechungsindex nₛ des Füllstoffs (13B) ist und die außerordentliche Brechungsindexachsenrichtung des doppelbrechenden Gittermaterials derart eingestellt ist, dass ein einfallender linear polarisierter Lichtstrahl mit der Wellenlänge λ₁, der eine erste Polarisationsebene hat, ein gewöhnlich polarisiertes Licht wird und ohne Beugung durchgelassen wird, und ein einfallender linear polarisierter Lichtstrahl mit der Wellenlänge λ₂, der eine zweite Polarisation senkrecht zu der ersten Polarisationsebene hat, außerordentlich polarisiertes Licht wird und gebeugt wird, um Beugungslichtstrahle 0-ter und ±1-er Ordnung zu erzeugen; und
das Gittermaterial des zweiten Beugungsgitters ein doppelbrechendes Gittermaterial ist, wobei der normale Brechungsindex n₀ des doppelbrechenden Gittermaterials im Wesentlichen gleich dem Brechungsindex nₛ des Füllstoffs (15B) ist und die außerordentliche Brechungsindexachsenrichtung des doppelbrechenden Materials des zweiten Beugungsgitters derart eingestellt ist, dass sie senkrecht zu der außerordentlichen Brechungsindexachsenrichtung des doppelbrechenden Gittermaterials des ersten Beugungsgitters ist, um einen einfallenden Lichtstrahl mit der Wellenlänge λ₂ ohne Beugung durchzulassen und einen einfallenden Lichtstrahl mit der Wellenlänge λ₁ zu beugen, um Beugungslichtstrahle 0-ter und ±1-er Ordnung zu erzeugen.

7. Optische Kopfvorrichtung, die die Doppelwellenlängenlichtquelleneinheit, wie in jedem der Ansprüche 1 bis 6 definiert, umfasst, die in Verbindung mit wenigstens einer Objektivlinse (24) verwendet werden soll.

## Revendications

1. Unité de source lumineuse à double longueur d'onde comprenant une source lumineuse à double longueur d'onde (44) qui émet deux faisceaux lumineux de lumière polarisée linéairement λ₁ et λ₂ depuis des points d'émission différents, un photo-détecteur et un élément de diffraction à double longueur d'onde afin de transmettre les deux faisceaux lumineux de différentes longueurs d'onde,
dans laquelle l'élément de diffraction à double longueur d'onde (41) comprend :
un premier réseau de diffraction (3) capable de générer des faisceaux lumineux de diffraction d'au moins de l'ordre de 0 et 1, lequel transmet sans diffraction un faisceau lumineux de la longueur d'onde λ₁, et lequel diffracte au moins un faisceau lumineux qui a un plan de polarisation spécifique dans un faisceau lumineux de la polarisation λ₂ et le convertit en un faisceau de poursuite, le premier réseau de diffraction comprenant un matériau de réseau formant un réseau de diffraction de forme concave-convexe (13A ; 20A) et un matériau de remplissage (13B ; 20B) qui remplit la partie concave-convexe du matériau de réseau, sachant que les indices de réfraction du matériau de réseau et du matériau de remplissage sont égaux pour le faisceau lumineux incident de la longueur d'onde λ₁ qui est transmis sans diffraction et sachant que les indices de réfraction du matériau de réseau et du matériau de remplissage (13B ; 20B) sont différents pour le au moins un faisceau lumineux qui a un plan de polarisation spécifique dans le faisceau lumineux incident de la longueur d'onde λ₂ qui est diffracté et converti en un faisceau de poursuite,
un second réseau de diffraction (3) capable de générer des faisceaux lumineux de diffraction d'au moins de l'ordre de 0 et 1, lequel diffracte au moins un faisceau lumineux qui a un plan de polarisation spécifique dans un faisceau lumineux de la polarisation λ₁ et le convertit en un faisceau de poursuite, et lequel transmet sans diffraction un faisceau lumineux de la longueur d'onde λ₂, le second réseau de diffraction comprenant un matériau de réseau formant un réseau de diffraction de forme concave-convexe (15A ; 21A) et un matériau de remplissage (15B ; 21B) qui remplit la partie concave-convexe du matériau de réseau, sachant que les indices de réfraction du matériau de réseau et du matériau de remplissage sont égaux pour le faisceau lumineux incident de la longueur d'onde λ₂ qui est transmis sans diffraction et sachant que les indices de réfraction du matériau de réseau et du matériau de remplissage sont différents pour le au moins un faisceau lumineux qui a un plan de polarisation spécifique dans le faisceau lumineux incident de la longueur d'onde λ₁ qui est diffracté et converti en un faisceau de poursuite,
un troisième réseau de diffraction qui comprend un matériau de réseau (5A) formant un réseau de diffraction de forme concave-convexe et un matériau de remplissage (5B) qui remplit la partie concave-convexe du matériau de réseau, sachant que les indices de réfraction du matériau de réseau (5A) et du matériau de remplissage (5B) pour un faisceau lumineux incident de la longueur d'onde λ₁ sont égaux de telle sorte que le faisceau lumineux est transmis sans diffraction et que les indices de réfraction du matériau de réseau (5A) et du matériau de remplissage (5B) sont différents pour un faisceau lumineux incident de la longueur d'onde λ₂ de manière à diffracter une quantité détectable du faisceau lumineux de la longueur d'onde λ₂, et
un quatrième réseau de diffraction (6A ; 6B) qui transmet un faisceau lumineux incident polarisé linéairement de la longueur d'onde λ₁ ayant un premier plan de polarisation, et qui diffracte une quantité détectable d'un faisceau lumineux incident polarisé linéairement de la longueur d'onde λ₁ ayant un second plan de polarisation perpendiculaire au premier plan de polarisation, et qui transmet un faisceau lumineux incident polarisé linéairement de la longueur d'onde λ₂ ayant le premier plan de polarisation.

2. Unité de source lumineuse à double longueur d'onde conformément à la revendication 1, dans laquelle le quatrième réseau de diffraction (6A ; 6B), pour un faisceau lumineux incident polarisé extraordinairement de la longueur d'onde λ₁, est adapté de manière à générer une différence de phase de 2 Π (nₑ - nₛ) d₂ / λ₁, sachant que « ne » est l'indice de réfaction extraordinaire d'un polymère à cristaux liquides qui constitue une partie concave-convexe du quatrième réseau de diffraction (6A ; 6B) et que « nₛ » est l'indice de réfaction homogène du matériau de remplissage qui remplit les parties concaves et que « d₂ » est la profondeur du réseau (6A ; 6B).

3. Unité de source lumineuse à double longueur d'onde conformément à l'une ou l'autre des revendications 1 et 2, dans laquelle un côté de sortie de lumière de l'élément de diffraction à double longueur d'onde est prévu avec un panneau de mise en phase (26) qui génère une différence de phase d'un nombre impair de fois de λ₁ /4 pour un faisceau lumineux de la longueur d'onde λ₁.

4. Unité de source lumineuse à double longueur d'onde conformément à l'une des revendications 1, 2 ou 3, dans laquelle le premier réseau de diffraction et le second réseau de diffraction constituent un réseau de diffraction à sélection de la double longueur d'onde et dans laquelle :
le premier réseau de diffraction est un réseau de diffraction à polarisation qui transmet sans diffraction un faisceau lumineux polarisé linéairement de la longueur d'onde λ₁ ayant un premier plan de polarisation, et qui diffracte un faisceau lumineux polarisé linéairement de la longueur d'onde λ₂ ayant un second plan de polarisation perpendiculaire au premier plan de polarisation, et qui le convertit en un faisceau de poursuite,
le second réseau de diffraction est un réseau de diffraction à polarisation qui diffracte un faisceau lumineux polarisé linéairement de la longueur d'onde λ₁ ayant le premier plan de polarisation et qui le convertit en un faisceau de poursuite et qui transmet sans diffraction un faisceau lumineux polarisé linéairement de la longueur d'onde λ₂ ayant le second plan de polarisation.

5. Unité de source lumineuse à double longueur d'onde conformément à l'une quelconque des revendications 1 à 3, dans laquelle un quelconque parmi le matériau de réseau ou le matériau de remplissage (20B) du premier réseau de diffraction et un quelconque parmi le matériau de réseau ou le matériau de remplissage (21B) du second réseau de diffraction contient un pigment organique qui absorbe la lumière.

6. Unité de source lumineuse à double longueur d'onde conformément à l'une quelconque des revendications 1 à 4, dans laquelle :
le matériau de réseau du premier réseau de diffraction est un matériau de réseau biréfringent, sachant que l'indice de réfraction ordinaire « n₀ » du matériau de réseau biréfringent est sensiblement égal à l'indice de réfraction « nₛ » du matériau de remplissage (13B) et sachant que la direction d'axe de l'indice de réfraction extraordinaire du matériau de réseau biréfringent est ajustée de telle sorte qu'un faisceau lumineux incident polarisé linéairement de la longueur d'onde λ₁ ayant un premier plan de polarisation devienne une lumière ordinaire polarisée, et est transmis sans diffraction, et de telle sorte qu'un faisceau lumineux incident polarisé linéairement de la longueur d'onde λ₂ ayant un second plan de polarisation perpendiculaire au premier plan de polarisation devienne une lumière extraordinaire polarisée et soit diffracté de manière à générer les faisceaux lumineux de diffraction d'au moins de l'ordre de 0 et 1 ; et
le matériau de réseau du second réseau de diffraction est un matériau de réseau biréfringent, sachant que l'indice de réfraction ordinaire « n₀ » du matériau de réseau biréfringent est sensiblement égal à l'indice de réfraction « nₛ » du matériau de remplissage (15B), et sachant que la direction d'axe de l'indice de réfraction extraordinaire du matériau biréfringent du second réseau de diffraction est ajustée de manière à être perpendiculaire à la direction d'axe de l'indice de réfraction extraordinaire du matériau biréfringent du premier réseau de diffraction, de manière à transmettre sans diffraction un faisceau lumineux incident de la longueur d'onde λ₂ et à diffracter un faisceau lumineux incident de la longueur d'onde λ₁ afin de générer des faisceaux lumineux de diffraction de l'ordre de 0 et 1.

7. Dispositif à tête optique qui comprend l'unité de source lumineuse à double longueur d'onde telle qu'elle est définie dans l'une quelconque des revendications 1 à 6, pour l'utilisation en combinaison avec au moins une lentille d'objectif (24).
